# EUROPEAN PATENT SPECIFICATION

(11) **EP 4 316 729 B1**
(45) Date of publication and mention of the grant of the patent: **10.06.2026**
(21) Application number: 23025003.7
(22) Date of filing: 18.07.2023
(51) Int. Cl.: B23Q 5/027, B23D 1/08, B23D 11/00, B23Q 5/04

(54) **MATERIAL REMOVING MACHINING MODULE**
MATERIALENTFERNUNGSBEARBEITUNGSMODUL
MODULE D'USINAGE PAR ENLÈVEMENT DE MATIÈRE

(30) Priority: 04.08.2022 IT 202200016752
(43) Date of publication of application: 07.02.2024
(73) Proprietor: M.T. S.r.l., 47842 San Giovanni in Marignano (RN) (IT)
(72) Inventor: Marchetti, Gianluca, 47842 San Giovanni in Marignano (RN) (IT); Leonardi, Paolo, Misano Adriatico (RN) (IT); Tardini, Valentino, Riccione (RN) (IT)
(74) Representative: Luppi Intellectual Property S.r.l.

(56) References cited:
- EP-A1- 2 402 099
- WO-A1-2005/021197
- WO-A1-2010/017806
- WO-A1-2013/140345

## Description

### Background of the invention

The invention relates to a machining module by material removal, in particular a slotting module to perform slotting and/or toothing machining, for example to make slots of keys or tongues, toothing, grooved sections, etc..

Specifically, but not exclusively, the machining module can be mounted on a tool turret of a numerically controlled lathe.

In particular, reference is made to a machining module comprising a movement device configured to transform a rotation motion of a drive shaft into a motion of a tool which completes a cycle comprising, in sequence, a forward stroke, in which the tool is engaged with a workpiece, a withdrawal section, in which the tool moves away from the workpiece at the end of the forward stroke, a return stroke, in which the tool is disengaged from the workpiece, and an approach section, in which the tool approaches the workpiece again at the end of the return stroke.

Patent publications WO 2005/021197 A1, WO 2010/017806 A1, EP 2 402 099 A1 and WO 2013/140345 A1 disclose examples of modules of this type.

WO 2005/021197 A1 discloses a slotting tool arranged on a slide moved back and forth by a rotor by means of a fit between a cam groove arranged on one circumference of the rotor and a pin sliding in the groove and connected to the slide, in whose operation the tool assumes, on the forward stroke, a lowered position for engaging the piece and, on the return stroke, a raised position for disengaging the piece, as a portion of the aforementioned circumference of the rotor has a reduction in diameter which allows, during the return stroke, to raise the slide, together with the tool, by the action of a spring.

WO 2010/017806 A1 discloses a tool carriage with a reciprocating motion driven by a driving shaft via a connecting rod-crank mechanism, in which the tool carriage runs on a horizontal linear guide arranged on a guide carriage in turn sliding on a fixed linear guide inclined from 2° to 6° with respect to the tool carriage guide, where a cam disc driven by the driving shaft is configured to move the guide carriage along the inclined guide, at the end of a stroke working position of the tool carriage, so as to cause a lifting of the tool carriage in a piece disengagement position of the tool, and to bring back the guide carriage, at the end of a return stroke of the tool carriage, so to cause a lowering of the tool carriage and therefore a return of the tool to the piece engagement position, to then perform a new work stroke.

EP 2 402 099 A1 discloses an input shaft connected with a rotating cam and a connecting rod mechanism, in which the movements of the cam and the mechanism are coordinated with each other so as to control a cyclical movement of a tool holder slide with a forward stroke (corresponding to half a turn of the cam) in which the tool removes material and then with a return stroke in which the tool essentially follows a parabola-shaped trajectory.

WO 2013/140345 discloses a module that can be mounted on a tool turret of a numerically controlled lathe, with a drive shaft connected to a power take-off of the turret for moving a slide back and forth by means of a planetary reduction gear, in which the slide comprises a portion which carries a cutting tool and which is guided by a drum cam between a working position, in which the tool is engaged with the workpiece, and a raised position, in which the tool is disengaged from the workpiece . The module of WO 2013/140345 is made according to the preamble of claim 1.

One of the drawbacks of the prior art is represented by the relatively low rigidity of the mechanical structure of the machining module, which entails, in particular, the risk that the trajectory of the tool in the machining stroke is not correct (in particular, a trajectory not perfectly straight), resulting in imperfections in the machined surface.

### Summary of the invention

An object of the invention is to create a machining module capable of overcoming the aforementioned drawback of the prior art.

An object is to provide an alternative module to those of the prior art and capable of moving a tool cyclically with a forward stroke, in which it is engaged with a piece, and a return stroke, in which it is disengaged from the piece.

An advantage is to make available a slotting module that can be mounted on a tool holder turret of a numerically controlled lathe.

An advantage is to provide a machining module characterized by a mechanical structure with high stiffness.

An advantage is to reduce the risk of manufacturing defects, even if the module is used to produce toothing or grooved sections.

An advantage is to give rise to an economic and simple processing module from a constructive and functional point of view.

An advantage is to implement a movement device which transforms the rotation of a drive shaft into the motion of a cutting tool in which the motion section in the material removal phase can be perfectly straight.

These objects and advantages, and others still, are achieved by a processing module according to one or more of the claims set out below.

In one example, a machining module - of the type in which a machining tool for material removal performs a forward stroke, in which it is engaged with a piece, and a return stroke, in which it is disengaged from the piece - includes a drive shaft, a mechanism for transforming a rotational motion of the drive shaft into an alternating rectilinear motion of a slide to perform the forward and return strokes, a shuttle sliding back and forth on the slide in a coordinated manner with the forward and return strokes by performing a first motion at the end of the forward stroke and a second motion, opposite to the first, at the end of the return stroke, a tool holder that is movable on the slide in a direction transversal to the motion of the slide and a guide mechanism which transforms the first motion of the shuttle in a movement of the tool holder such as to disengage the tool from the piece and the second motion of the shuttle in a movement of the tool holder such as to re-engage it with the piece to then start a new work cycle.

### Brief description of the drawings

The invention can be better understood and implemented with reference to the attached drawings, which illustrate an exemplifying and non-limiting embodiment, in which:

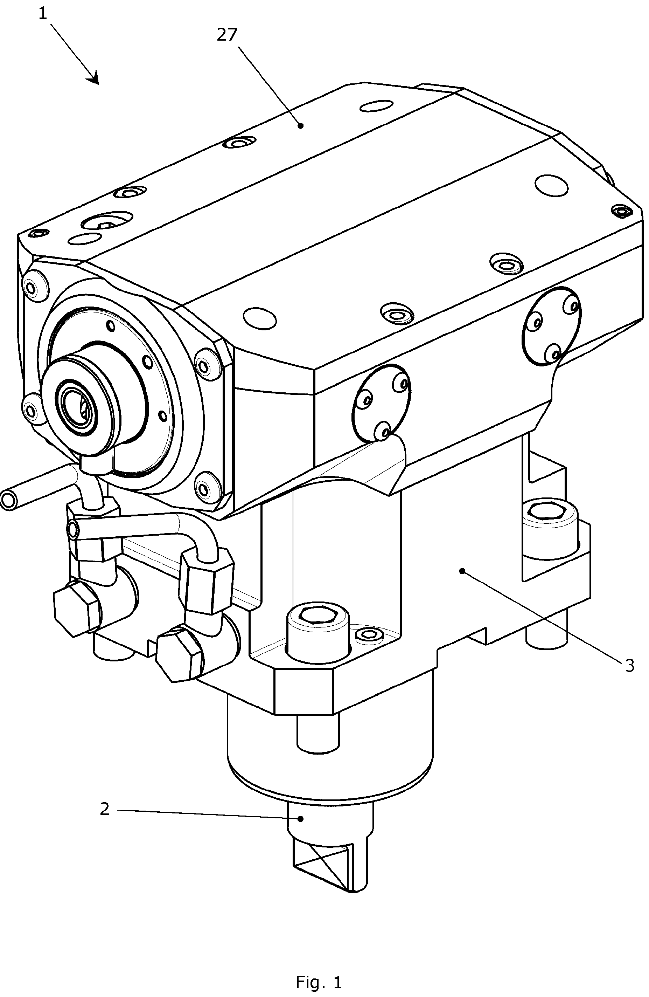

Figure 1 shows a perspective view of an example of a processing module made in accordance with the present invention;
Figure 2 is a section of the module of Figure 1 along a vertical section plane passing through the main axis of the drive shaft;
Figure 3 shows the module of Figure 1 in two different configurations of use, on the left with a slotting tool applied to the module and facing downwards and on the right with the slotting tool applied to the module and facing upwards;

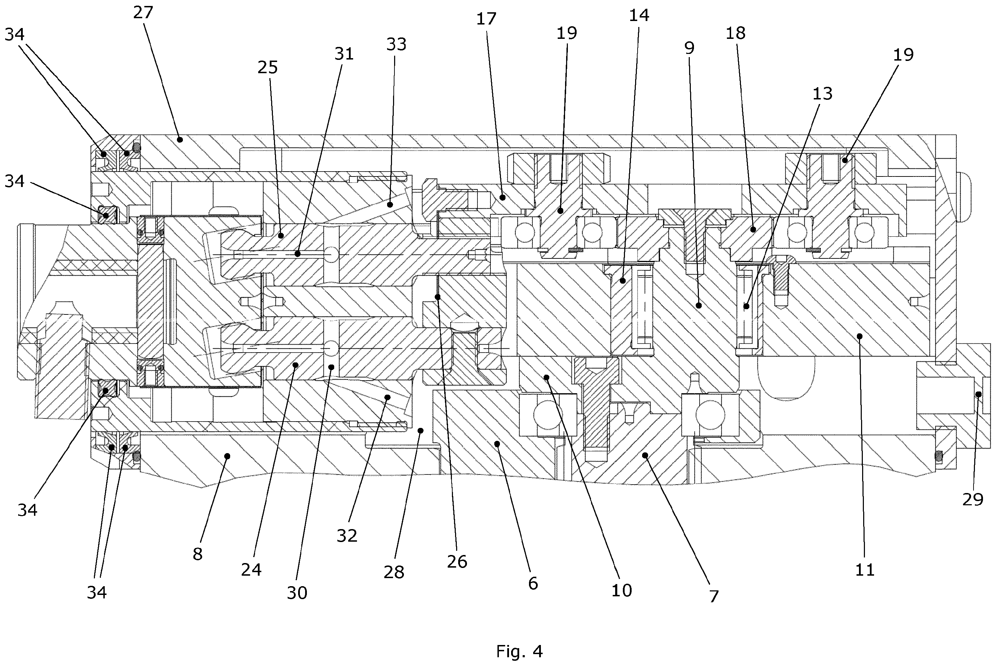

Figure 4 shows an enlarged detail of Figure 2;

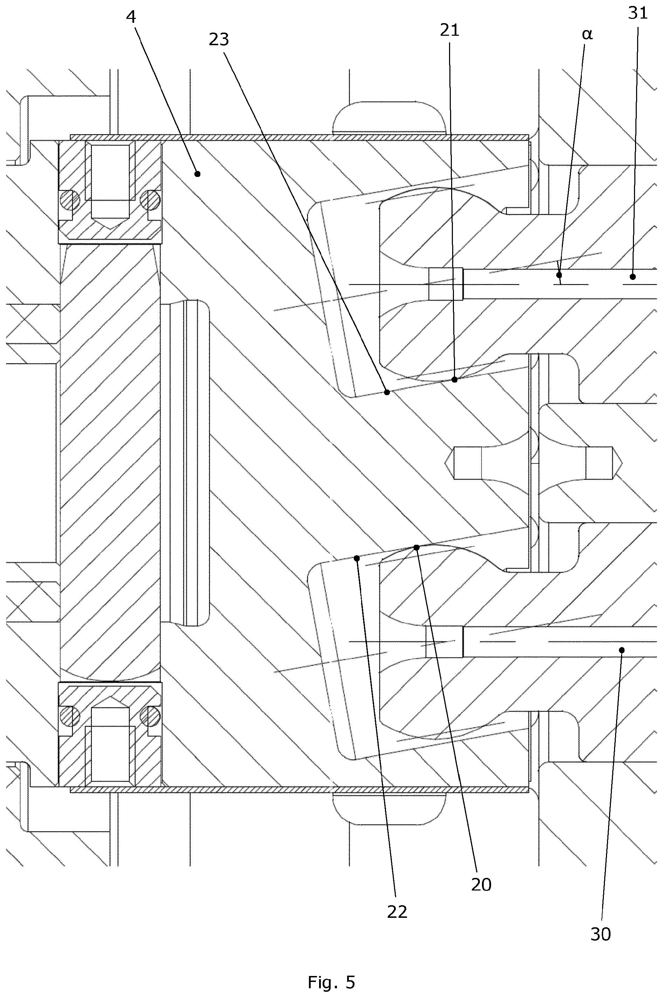

Figure 5 shows an enlarged detail of Figure 4;

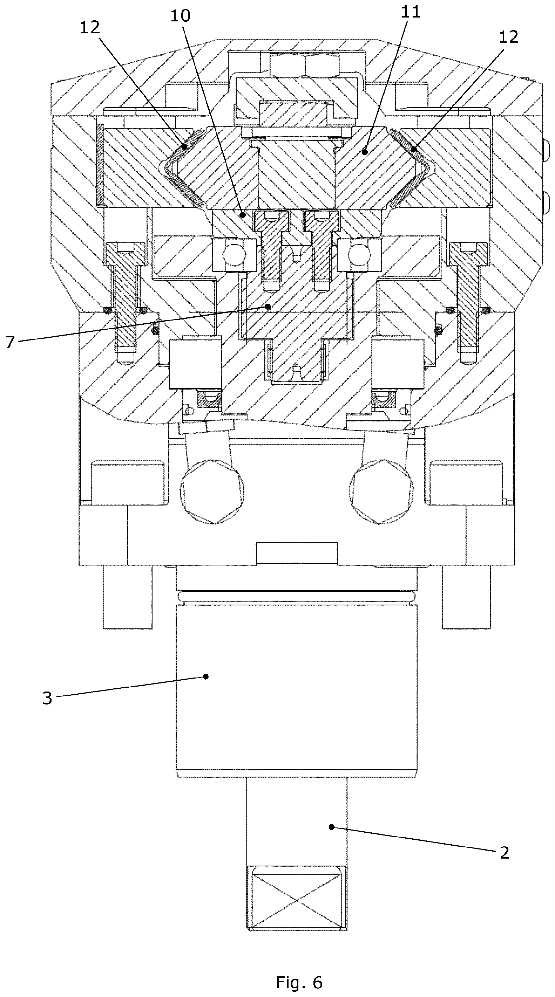

Figure 6 is the section VI-VI of Figure 2;

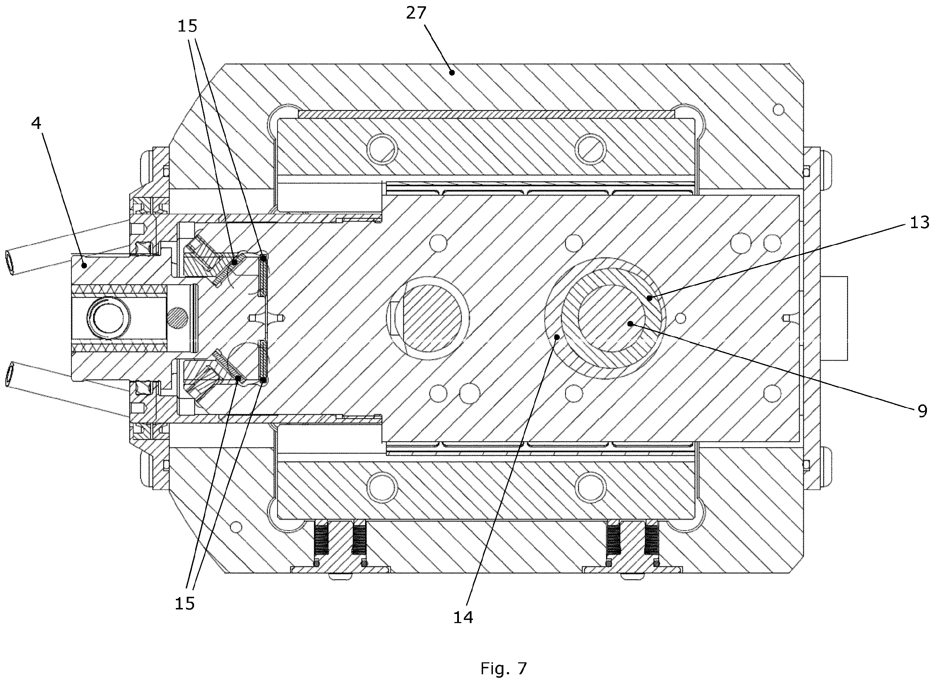

Figure 7 is the section VII-VII of Figure 2;

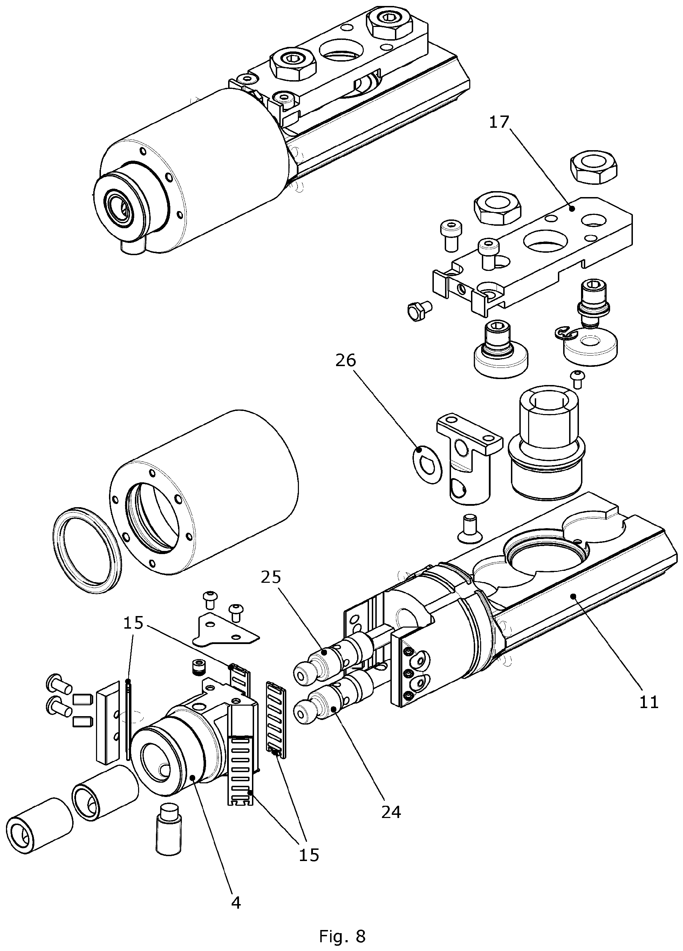

Figure 8 is an exploded view of the components of the slide of the module of Figure 1;
Figure 9 is a top view of the module of Figure 1 with some parts removed to better highlight others;
Figure 10 shows, enlarged, the cam profile visible in Figure 9.

### Detailed description

With reference to the aforementioned figures, 1 indicates as a whole a machining module for material removal, in particular a slotting module. In particular, the machining module can be mounted on a tool turret of a numerically controlled lathe. The slotting module 1 is suitable for carrying out slotting and/or toothing operations, in particular it can be used to make slots for keys or tongues, toothing, grooved sections, etc..

The machining module 1 comprises a drive shaft 2 which can be connected to a power take-off of a tool holder turret (not shown, for example of a known type) of a numerically controlled lathe. The drive shaft 2 is rotatably supported by a base 3 (for example made in several pieces fixed to each other) of the machining module 1. In this specific example reference is made to the particular case of a use position of the machining module 1 in which a main axis X of the drive shaft 2 is arranged vertically, even if it is possible to provide other use positions.

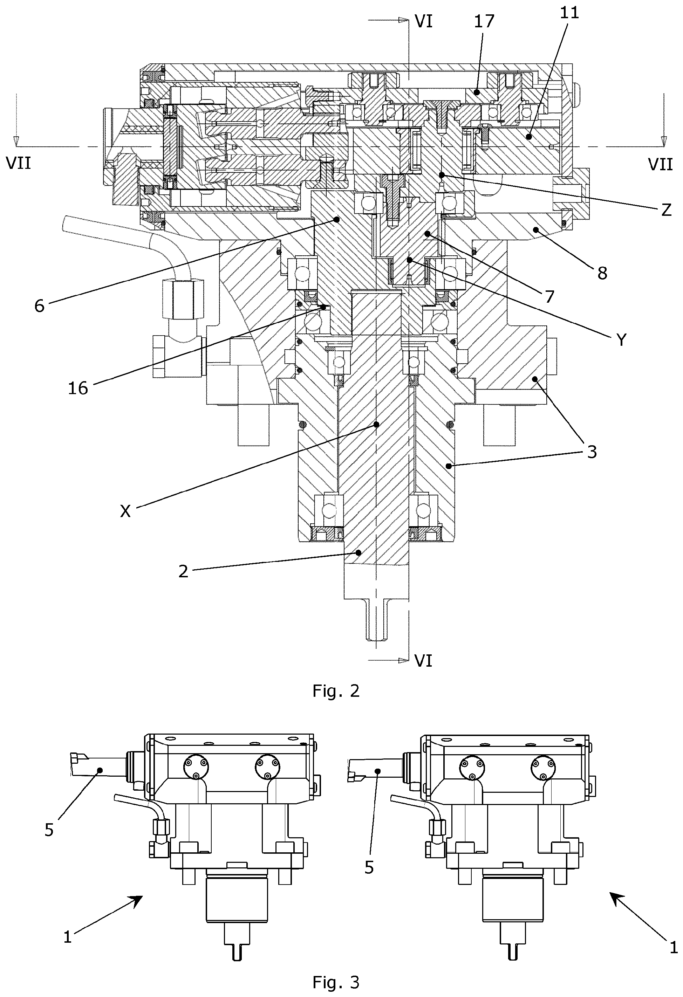

The machining module 1 comprises a tool holder 4 configured to carry a machining tool 5, in particular a slotting tool. It is possible to provide that the machining tool 5 can be selectively mounted in two or more configurations, for example in an upward configuration (on the left in Figure 3) or in a downward configuration (on the right in Figure 3).

The machining module 1 comprises a movement device configured to transform a rotational motion of the drive shaft 2 into a motion of the tool holder 4 along a predefined path. The predefined path may comprise, in particular, a cyclical path. The predefined path of the tool holder 4 includes a forward stroke (or work stroke) in which the machining tool 5 carried by the tool holder 4 is engaged with a workpiece to carry out a material removal. The predefined path of the tool holder 4 includes a return stroke in which the machining tool 5 is disengaged from the workpiece. The predefined path of the tool holder 4 includes a withdrawal section in which the machining tool 5 moves away from the workpiece between the forward stroke and the return stroke. The predefined path of the tool holder 4 includes an approach section in which the machining tool 5 approaches the workpiece again between the return stroke and the forward stroke, to then perform a new work cycle.

With reference to the example illustrated, the predefined path of the tool holder 4 may be operationally different depending on the mounting of the machining tool 5. In particular, the withdrawal and approach sections with respect to the workpiece will be, respectively, of ascent and descent in the case of the machining tool 5 facing downwards (on the right in Figure 3) and in an inverse manner, i.e. respectively, of descent and ascent, in the case of the machining tool 5 facing upwards (left in Figure 3).

The movement device comprises a planetary gear with a support 6 which can be rotated by the drive shaft 2. The support 6 may be fixed to the drive shaft 2 so as to rotate around the main axis X of the drive shaft 2.

The planetary gear may comprise, in particular, at least one pinion 7 carried eccentrically by the support 6. The pinion 7 rotates on the support 6 about a pinion axis Y (parallel to the main axis X). The planetary gear may comprise, in particular, at least one internal toothing 8 coupled to the pinion 7. The internal toothing 8 meshing with the pinion 7 is fixed to the base 3 and is circular and coaxial with the axis of rotation of the support 6 (in this example coincident with the principal axis X).

The planetary gear comprises a pin 9 carried eccentrically by the pinion 7. The pin 9 may be arranged, in particular, on a crank 10 fixed to the pinion 7, for example by screw fixing means.

The planetary gear is configured in such a way as to transform a rotational motion of the drive shaft 2 into an alternating rectilinear motion of the pin 9.

During its rectilinear reciprocating motion, the pin 9 also performs a rotation on itself around a pin axis Z.

In particular, in order to obtain the aforementioned reciprocating rectilinear motion of the pin 9 together with the rotation on itself around the pin axis Z, the planetary gear is configured in such a way that a pitch diameter of the pinion 7 is equal to twice a pinion-shaft center distance between the pinion axis Y of the pinion 7 and the main axis X of the drive shaft 2. Furthermore, the planetary gear is configured such that a diameter of the internal toothing 8 is equal to twice the pitch diameter of the pinion 7.

The planetary gear is also configured in such a way that a pin-pinion center distance between the pin axis Z of the pin 9 and the pinion axis Y of the pinion 7 (i.e., essentially, the rotation radius of the crank 10) is equal to the aforementioned pinion-shaft center distance between the pinion axis Y and the main axis X.

This configuration represents a particular case of planetary gear such as to cause an alternating rectilinear motion of the pin 9, with simultaneous rotation of the pin 9 around the pin axis Z.

In this specific example, the planetary gear is configured for a 1:1 transmission ratio between the drive shaft 2 and the support 6 (the support 6 being keyed to the drive shaft 2). It is possible to provide, in examples not illustrated, that the planetary gear is configured with a desired reduction ratio (for example as described in WO 2013/140345 ).

The geometry of the planetary gear, whatever the desired transmission ratio, allows the rotational motion of the drive shaft 2 to be transformed into the reciprocating rectilinear motion of the pin 9, ensuring that, during its reciprocating rectilinear motion, the pin 9 also performs a rotation on itself around the pivot axis Z.

The movement device comprises a slide 11 configured to carry out an alternating rectilinear motion guided by the pin 9. The slide 11 is slidably coupled to the base 3 of the machining module 1. The slide 11 slides on guide means (for linear sliding), in particular on two guides 12 arranged on the base 3 on two opposite sides of the slide 11.

The pin 9 is coupled in a slot obtained on the slide 11 through the interposition of a rotation support 13, for example a roll bearing. The pin 9 may be coupled in a slot of the slide 11 by means of the interposition of an eccentric bush 14, so as to compensate for any misalignment between the slide 11 and the guide means on which the slide slides back and forth with linear motion.

The tool holder 4 is carried by the slide 11 and is movable with respect to the slide 11 with a transverse motion in a direction transverse to the reciprocating rectilinear motion of the slide 11. The reciprocating rectilinear motion of the slide 11 allows the tool holder 4 to perform the forward and return strokes of its predefined path. The reciprocating rectilinear motion of the slide 11 may be, as in this example, horizontal. The transversal motion of the tool holder 4 with respect to the slide 11 allows the tool holder 4 to carry out the distance and approach sections of its predefined path. The transversal motion of the tool holder 4 may be, as in this example, vertical.

The tool holder 4 slides with respect to the slide 11 along one or more linear guides 15, in particular sliding guides with rolling bodies, for example roller flat cages. In this specific example, four roller flat cages are arranged. The tool holder 4 slides with respect to the slide 11 along one or more linear guides 15 arranged orthogonal with respect to the reciprocating rectilinear motion of the slide 11.

A flat surface of the crank 10 (which is integral with the pinion 7 and with the pin 9) is kept in contact with a flat surface of the slide 11 by means of an elastic force. The (vertical) elastic force may be exerted, in particular, by elastic means 16 (for example a wave spring) operating on the planetary gear, in particular on the support 6 (between the support 6 and the base 3).

These flat surfaces are perpendicular to an axis of rotation of the support 6 (in this case coinciding with the main axis X of the drive shaft 2). The aforementioned flat surface (horizontal facing downwards) of the slide 11 is arranged above the aforementioned flat surface (horizontal facing upwards) of the crank 10.

The movement device comprises a shuttle 17 arranged on the slide 11 and sliding with respect to the slide 11 with an alternating motion (in particular, a rectilinear motion parallel to the reciprocating rectilinear motion of the slide 11). The reciprocating motion of the shuttle 17 with respect to the slide 11 comprises an intermittent motion, with stationary periods (with respect to the slide 11) during the forward and return strokes of the slide 11, or for most of the duration of these strokes, and with the activation of a first shuttle motion in one direction (for example forward) at the end of the outward stroke and with the activation of a second shuttle motion in the opposite direction (for example backwards) at the end of the return stroke.

In other words, the intermittent reciprocating motion of the shuttle 17 with respect to the slide 11 is guided so that the shuttle performs the first motion in one direction with respect to the slide 11 when the machining tool 5 carried by the tool holder has finished its working stroke (i.e. at the end of the forward stroke) and in such a way that the shuttle performs the second movement in the opposite direction with respect to the slide when the machining tool 5 is ready to start a new working stroke (i.e. at the end of the return stroke), as will be better explained in the continuation of the description.

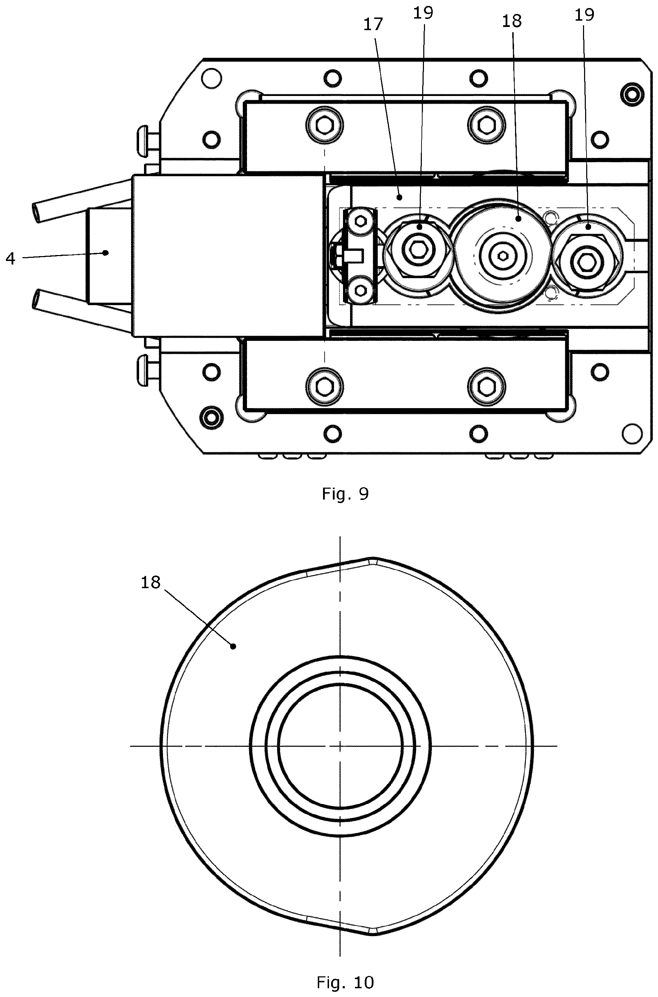

The reciprocating motion of the shuttle 17 with respect to the slide 11 is guided by guide means comprising a cam body 18 provided with a cam profile arranged on the slide 11. The cam body 18 may comprise, in particular, a disc with the cam profile located on the periphery of the disc. The cam body 18 with the cam profile is rotated by the pin 9 about the pivot axis Z. The cam body 18 is fixed to the pin 9 (for example by screw fixing means). The cam profile (better visible in Figure 10) comprises two segments in the arc of a circumference with different diameters and two connecting segments which join the two segments in the arc of a circumference. Each connecting section may comprise, in particular, a straight section and a curved section.

The guiding means comprises cam follower means 19 coupled to the cam profile of the cam body 18 and connected to the shuttle 17 so that a movement of the cam follower means 19 guided by the cam profile causes a similar movement of the shuttle 17 with respect to the slide 11.

During the contact of the cam follower means 19 with the two segments of the cam profile in a circumferential arc, the cam follower means 19 do not move (with respect to the rotation axis of the cam body 18) and therefore the shuttle 17 does not move moves with respect to slide 11.

With each revolution of the cam body 18, the cam follower means 19 meets the two connecting segments of the cam profile of the cam body 18 twice.

As a result of the contact of the cam follower means 19 with the two connection sections of the cam profile of the cam body 18, the cam follower means 19 is guided by the cam profile to carry out, at each turn, two mutually opposed movements, i.e. a movement in one direction, whereby the shuttle 17 is guided to perform the aforementioned first motion, and a movement in the opposite direction, returning to the previous position, whereby the shuttle 17 is guided to perform the aforementioned second motion.

In this specific example, the cam follower means 19 comprises two cam followers diametrically opposite with respect to the axis of the cam body 18 (coinciding with the pin axis Z) and coupled simultaneously to the cam profile of the cam body 18, whereby the cam follower means 19 can be guided without using springs to exert contrasting elastic forces. Each of the two cam followers may comprise, in particular, a wheel in contact with the cam profile of the cam body 18. The contact of each cam follower with the cam profile may be adjustable, for example by means of an eccentric pin.

The movement device comprises a mechanism which connects the shuttle 17 with the tool holder 4 to control the transversal (vertical) motion of the tool holder 4 with respect to the slide 11 as a function of the (horizontal) motion of the shuttle 17 (controlled by the guide means described above) with respect to slide 11.

The mechanism is configured in such a way that, as a result of the first movement (for example, forward) of the shuttle 17 with respect to the slide 11, the tool holder 4 is moved from a first (lower) position to a second (upper) position by determining the withdrawal section (upward movement, moving away from the workpiece if the machining tool 5 points downwards).

The mechanism is configured in such a way that, due to the second motion (for example, backwards) of the shuttle 17 with respect to the slide 11, the tool holder 4 is brought back from the second (upper) position to the first (lower) position by determining the approach section (downward movement, approach to the workpiece with the machining tool 5 pointing downwards).

The mechanism comprises contact means carried by the shuttle 17 and shape means carried by the tool holder 4. The mechanism is configured in such a way that, as a result of the first movement of the shuttle 17 with respect to the slide 11, the contact means of the shuttle 17 push the shape means of the tool holder 4 to move the tool holder 4 to the second position. The mechanism is configured in such a way that, due to the second motion of the shuttle 17 with respect to the slide 11, the contact means of the shuttle 17 push the shape means of the tool holder 4 to return the tool holder 4 to the first position.

The contact means may comprise, as in this example, at least one first contact element 20 and at least one second contact element 21 carried by the shuttle 17. The shape means may comprise, as in this example, at least one first shape 22 and at least one second shape 23 carried by the tool holder 4. The first shape 22 is coupled with the first contact element 20 for controlling one of the two movements, for example the withdrawal (upward) movement. The second shape 23 is coupled with the second contact element 21 for controlling the other of the two movements, for example the rapprochement (descent) movement.

The mechanism is configured in such a way that, due to the effect of the first movement of the shuttle 17 with respect to the slide 11, the first contact element 20 pushes the first shape 22 to move the tool holder 4 to the second position (upward movement or withdrawal movement of the tool from the piece with the tool pointing downwards).

The mechanism is configured in such a way that, as a result of the second movement of the shuttle 17 with respect to the slide 11, the second contact element 21 pushes the second shape 23 to return the tool holder 4 to the first position (movement downwards or movement of the tool towards the piece with the tool pointing downwards).

The first shape 22 and the second shape 23 are inclined by an angle α (for example, with a constant inclination) with respect to the rectilinear reciprocating motion of the slide, with α included in a range selected from a set which includes the following intervals: 6° < α < 12°, 7° < α < 12°, 8° < α < 12°, 6° < α < 11°, 7° < α < 11°, 8° < α < 11°, 9° < α < 11°. In particular, the interval 8° < α < 12° may be selected.

The first shape 22 is arranged inside a first hole made in the tool holder 4. The second shape 23 is arranged inside a second hole made in the tool holder 4. A longitudinal axis of the first hole is substantially parallel to a longitudinal axis of the second hole. The longitudinal axes of the first and second holes are inclined with respect to the (horizontal) sliding axis of the slide 11 by the angle α.

The first contact element 20 is arranged on a first spherical head arranged on a first sliding element 24 of the shuttle 17 which slides axially with respect to the slide 11. The second contact element 21 is arranged on a second spherical head arranged on a second sliding element 25 of the shuttle 17 which slides axially with respect to the slide 11. The first sliding element 24 and the second sliding element 25 comprise two rods (for example, fixed to a main body of the shuttle 17 coupled to the cam follower means 19) extending in length in an axial direction.

It is possible to provide preloading means to carry out, in an assembly step, a preloading of the contact means against the shape means. The preloading means may comprise, in particular, screw means with at least one safety washer 26. The preloading means may comprise, in particular, preload adjustment means. The preload adjustment means may operate, for example, on the first sliding element 24 and/or on the second sliding element 25.

The machining module comprises a housing 27 which hermetically encloses a lubricant chamber 28 which contains a lubricant and in which the slide 11 is movable. The first contact element 20 and the second contact element 21 communicate with the lubricant chamber 28 through a lubricant circuit obtained at least in part in the slide 11 and/or at least in part in the shuttle 17.

The machining module comprises an indicator 29 of the lubricant level in the lubricant chamber 28. The indicator 29 is arranged on the housing 27. The indicator 29 is arranged so as to indicate a desired level of cold lubricant, when the main axis X of the drive shaft 2 is arranged vertically.

The lubricant circuit comprises a first lubricant passage 30 obtained inside a first portion of the shuttle 17, in particular inside the first sliding element 24. The lubricant circuit comprises a second lubricant passage 31 obtained inside a second portion of the shuttle 17, in particular inside the second sliding element 25. The first lubricant passage 30 communicates with the first contact element 20 and with an outer lateral surface of the first portion of the shuttle 17 (in this case an outer lateral surface of the first sliding element 24) contained in a first cavity of the slide 11. The second lubricant passage 31 communicates with the second contact element 21 and with an outer lateral surface of the second portion of the shuttle 17 (in this case an outer lateral surface of the second sliding element 25) contained in a second cavity of the slide 11. The first lubricant passage 30 and/or the second lubricant passage 31 may comprise, in particular, an axial duct and one, two, three or more radial ducts.

The lubricant circuit comprises a first lubricant duct 32 (for example, with an oblique longitudinal axis) obtained inside the slide 11 and communicating with the first cavity and with the lubricant chamber 28.

The lubricant circuit comprises a second lubricant duct 33 (for example, with an oblique longitudinal axis) obtained inside the slide 11 and communicating with the second cavity and with the lubricant chamber 28.

The first contact element 20 communicates with the lubricant chamber 28 via the first lubricant passage 30 and the first lubricant duct 32. The second contact element 21 communicates with the lubricant chamber 28 via the second lubricant passage 31 and the second lubricant duct 33.

The machining module comprises a plurality of seals 34, suitable for sealing the lubricant, in particular the lubricant contained in the lubricant chamber 28. It is possible to provide at least one seal for the lubricant disposed between the casing 27 and the slide 11 (in particular, a double seal) and/or at least one lubricant seal disposed between the slide 11 and the tool holder 4 (in particular, a double seal).

In operation, with reference to the machining tool 5 mounted downwards (on the right in Figure 3), the rotation of the main axis X of the drive shaft 2 is transformed into the reciprocating rectilinear motion of the pin 9 of the planetary gear, which in turn actuates the rectilinear reciprocating motion of the slide 11. The axial stroke of the slide 11 may be, purely by way of non-limiting example, equal to a value in the range of 50 ± 10 millimeters. The reciprocating rectilinear motion of the slide 11 determines the forward (working) stroke and the return stroke of the tool holder 4.

In this example, in which the transmission ratio between the drive shaft 2 and the support 6 is 1:1, considering, for example, starting from a rear end position of the slide 11, a rotation of 180° of the drive shaft 2 will cause the slide 11 to move to a forward end position, and a further 180° rotation of the drive shaft 2 to complete one full revolution will cause the slide 11 to return to the rear end position.

The rotation of the pin 9 on itself around the pin axis Z causes the coaxial rotation of the cam profile (the cam body 18 with the cam profile being integral with the pin 9) which in turn causes the forward displacement of the shuttle 17 (with respect to the slide 11) at the end of the forward stroke of the slide 11 and the backward return of the shuttle 17 at the end of the return stroke of the slide 11.

During the forward and return strokes of the slide 11, the shuttle 17 and the tool holder 4 are carried by the slide 11 and therefore move with the same forward and return strokes together with the slide 11.

The forward movement of the shuttle 17 with respect to the slide 11 causes the upward movement of the tool holder 4 (removal of the machining tool 5 from the piece in the case of a downward tool), while the backward movement of the shuttle 17 with respect to the slide 11 causes the downward movement of the tool holder 4 (the machining tool 5 moves closer to the piece).

The (horizontal) stroke of the shuttle 17 with respect to the slide 11 may be, purely by way of non-limiting example, equal to a value in the range of 1.00 ± 0.20 mm. The (vertical) stroke of the tool holder 4 with respect to the slide 11 may be, purely by way of non-limiting example, equal to a value in the range 0.18 ± 0.04 mm.

In the case of the tool facing upwards, the upward movement of the tool holder 4 will correspond to the approach of the machining tool 5 to the piece, while the downward movement of the tool holder 4 will correspond to the withdrawal movement of the machining tool 5 from the piece.

Legend:
- 1: Machining module
- 2: Drive shaft
- 3: Base
- 4: Tool holder
- 5: Machining tool
- 6: Support
- 7: Pinion
- 8: Internal toothing
- 9: Pin
- 10: Crank
- 11: Slide
- 12: Guides
- 13: Rotation support
- 14: Eccentric bushing
- 15: Linear guides
- 16: Elastic means
- 17: Shuttle
- 18: Cam body
- 19: Cam follower means
- 20: First contact element
- 21: Second contact element
- 22: First shape
- 23: Second shape
- 24: First sliding element
- 25: Second sliding element
- 26: Safety washer
- 27: Casing
- 28: Lubricant chamber
- 29: Level indicator
- 30: First lubricant passage
- 31: Second lubricant passage
- 32: First lubricant duct
- 33: Second lubricant duct
- 34: Seals
- X: Main axis
- Y: Pinion axis
- Z: Pin axis

## Claims

1. Machining module, comprising a tool holder (4), a drive shaft (2) and a movement device configured to transform a rotation motion of said drive shaft (2) into a motion of said tool holder (4) along a predefined path comprising a forward stroke, in which a machining tool (5) carried by said tool holder (4) is engaged with a workpiece, a return stroke, in which the machining tool (5) is disengaged from the workpiece, a withdrawal section, in which the machining tool (5) moves away from the workpiece between said forward stroke and said return stroke, and an approach section, in which the machining tool (5) approaches to the workpiece between said return stroke and said forward stroke, said movement device comprising:
- a planetary gear with a support (6) which can be rotated by said drive shaft (2), a pinion (7) driven eccentrically by said support (6), a pin (9) driven eccentrically by said pinion (7), and an internal toothing (8) coupled to said pinion (7), said planetary gear being configured to transform a rotation motion of said drive shaft (2) into a reciprocating rectilinear motion of said pin (9) during which said pin (9) rotates on itself around a pin axis (Z);
- a slide (11) configured to perform a reciprocating rectilinear motion guided by said pin (9), said tool holder (4) being carried by said slide (11) and being movable with respect to said slide with a transverse motion in a transverse direction to said reciprocating rectilinear motion, whereby said reciprocating rectilinear motion of said slide (11) allows said tool holder (4) to perform said forward and return strokes and said transverse motion of said tool holder (4) with respect to said slide (11) allows said tool holder (4) to perform said withdrawal and approach sections;
**characterized in that** said movement device comprises:
- a shuttle (17) arranged on said slide (11) and slidable with respect to said slide (11) with a reciprocating motion guided so that said shuttle (17) performs a first motion in a direction with respect to said slide (11) at the end of said forward stroke and a second motion in the opposite direction to said first motion with respect to said slide (11) at the end of said return stroke;
- a mechanism which connects said shuttle (17) with said tool holder (4) and which is configured so that, due to the effect of said first motion of said shuttle (17) with respect to said slide (11), said tool holder (4) is moved from a first position to a second position determining said withdrawal section, and, due to the effect of said second motion of said shuttle (17) with respect to said slide (11), said tool holder (4) is brought back from said second position to said first position determining said approach section.

2. Module according to claim 1, wherein said mechanism comprises contact means carried by said shuttle (17) and shape means carried by said tool holder (4), said mechanism being configured so that, due to the effect of said first motion of said shuttle (17) with respect to said slide (11), said contact means pushes said shape means to move said tool holder (4) into said second position, and, due to the effect of said second motion of said shuttle (17) with respect to said slide (11), said contact means pushes said shape means to bring said tool holder (4) back to said first position.

3. Module according to claim 2, wherein said contact means comprises at least one first contact element (20) and at least one second contact element (21) and said shape means comprises at least one first shape (22) and at least one second shape (23) coupled, respectively, with said first contact element (20) and with said second contact element (21), said mechanism being configured so that, due to the effect of said first motion of said shuttle (17) with respect to said slide (11), said first contact element (20) pushes said first shape (22) to move said tool holder (4) into said second position, and, due to the effect of said second motion of said shuttle (17) with respect to said slide (11), said second contact element (21) pushes said second shape (23) to bring said tool holder (4) back to said first position.

4. Module according to claim 3, wherein said first shape (22) is arranged inside a first hole made in said tool holder (4) and said second shape (23) is arranged inside a second hole made in said tool holder (4).

5. Module according to claim 3 or 4, wherein said first shape (22) and said second shape (23) are inclined by an angle α with respect to said reciprocating rectilinear motion of said slide (11), with α included in one of the following ranges: 6° < α < 12°; 8° < α <12°; 6° < α < 11°; 8° < α <11°; 9° < α < 11°.

6. Module according to any one of claims 3 to 5, wherein said first contact element (20) is arranged on a first spherical head arranged on a first sliding element (24) of said shuttle (17) which is axially slidable with respect to said slide (11), and said second contact element (21) is arranged on a second spherical head arranged on a second sliding element (25) of said shuttle (17) which is axially slidable with respect to said slide (11).

7. Module according to any one of claims 3 to 6, comprising a casing (27) which hermetically encloses a lubricant chamber (28) in which said slide (11) is movable, said first and second contact elements (20 and 21) being communicating with said lubricant chamber (28) through a lubricant circuit obtained at least in part in said slide (11) and in said shuttle (17).

8. Module according to claim 7, wherein said lubricant circuit comprises a first lubricant passage (30) obtained inside a first portion of said shuttle (17) and a second lubricant passage (31) obtained inside a second portion of said shuttle (17), said first lubricant passage (30) being communicating with said first contact element (20) and with an external lateral surface of said first portion contained in a first cavity of said slide (11), said second lubricant passage (31) being communicating with said second contact element (21) and with an external lateral surface of said second portion contained in a second cavity of said slide (11), said lubricant circuit comprising a first lubricant duct (32) obtained inside said slide (11) and communicating with said first cavity and with said lubricant chamber (28) and a second lubricant duct (33) obtained inside said slide (11) and communicating with said second cavity and with said lubricant chamber (28), whereby said first contact element (20) communicates with said lubricant chamber (28) through said first lubricant passage (30) and said first lubricant duct (32) and said second contact element (21) communicates with said lubricant chamber (28) through said second lubricant passage (31) and said second lubricant duct (33).

9. Module according to any one of the preceding claims, wherein said reciprocating motion of said shuttle (17) with respect to said slide (11) is guided by guide means comprising a cam body (18) with a cam profile that is arranged on said slide (11) and is brought into rotation by said pin (9) around said pin axis (Z), and cam follower means (19) coupled to said cam profile and connected to said shuttle (17); said cam follower means (19) comprising, in particular, two cam followers coupled to said cam profile.

10. Module according to any one of the preceding claims, wherein said tool holder (4) is slidable with respect to said slide (11) along one or more linear guides (15), in particular guides with rolling elements, for example flat roller cages.

11. Module according to any one of the preceding claims, wherein said tool holder (4) is slidable with respect to said slide (11) along one or more linear guides (15) arranged orthogonal with respect to said reciprocating rectilinear motion of said slide (11).

12. Module according to any one of the preceding claims, wherein said planetary gear is configured so that a pitch diameter of said pinion (7) is equal to twice the pinion-shaft distance between a pinion axis (Y) of said pinion (7) and a main axis (X) of said drive shaft (2), a radius of said internal toothing (8) is equal to said pitch diameter, and a pin-pinion distance between said pin axis (Z) and said pinion axis (Y) is equal to said pinion-shaft distance.

13. Module according to any one of the preceding claims, wherein said planetary gear is configured for a 1: 1 transmission ratio between said drive shaft (2) and said support (6), or for a reduction ratio.

14. Module according to any one of the preceding claims, wherein a flat crank surface integral with said pinion (7) and with said pin (9) is kept in contact with a flat surface of said slide (11) by means of an elastic force, said flat surfaces being orthogonal to an axis of rotation of said support (6).

## Patentansprüche

1. Bearbeitungsmodul, umfassend einen Werkzeughalter (4), eine Antriebswelle (2) und eine Bewegungsvorrichtung, die konfiguriert ist, um eine Rotationsbewegung der Antriebswelle (2) in eine Bewegung des Werkzeughalters (4) entlang eines vordefinierten Pfads zu transformieren, der einen Vorwärtshub, in dem ein von dem Werkzeughalter (4) getragenes Bearbeitungswerkzeug (5) mit einem Werkstück in Eingriff steht, einen Rückhub, in dem das Bearbeitungswerkzeug (5) von dem Werkstück gelöst wird, einen Rückzugsabschnitt, in dem sich das Bearbeitungswerkzeug (5) zwischen dem Vorwärtshub und dem Rückhub von dem Werkstück wegbewegt, und einen Annäherungsabschnitt umfasst, in dem sich das Bearbeitungswerkzeug (5) zwischen dem Rückhub und dem Vorwärtshub dem Werkstück nähert, wobei die Bewegungsvorrichtung umfasst:
- ein Planetengetriebe mit einem Träger (6), der von der Antriebswelle (2) gedreht werden kann, einem Ritzel (7), das exzentrisch von dem Träger (6) angetrieben wird, einem Stift (9), der exzentrisch von dem Ritzel (7) angetrieben wird, und einer Innenverzahnung (8), die an das Ritzel (7) gekoppelt ist, wobei das Planetengetriebe konfiguriert ist, um eine Drehbewegung der Antriebswelle (2) in eine geradlinige Hin- und Herbewegung des Stifts (9) umzuwandeln, während der sich der Stift (9) um sich selbst um eine Stiftachse (Z) dreht;
- einen Schlitten (11), der konfiguriert ist, um eine geradlinige Hin- und Herbewegung durchzuführen, die von dem Stift (9) geführt wird, wobei der Werkzeughalter (4) von dem Schlitten (11) getragen wird und in Bezug auf den Schlitten mit einer Querbewegung in einer Querrichtung zu der geradlinigen Hin- und Herbewegung bewegbar ist, wodurch die geradlinige Hin- und Herbewegung des Schlittens (11) des Werkzeughalters (4) ermöglicht, die Vorwärts- und Rückhübe durchzuführen, und die Querbewegung des Werkzeughalters (4) in Bezug auf den Schlitten (11) des Werkzeughalters (4) ermöglicht, die Rückzugs- und Annäherungsabschnitte durchzuführen;
**dadurch gekennzeichnet, dass** die Bewegungsvorrichtung umfasst:
- ein Schiffchen (17), das auf dem Schlitten (11) angeordnet und in Bezug auf den Schlitten (11) mit einer geführten Hin- und Herbewegung verschieblich ist, so dass das Schiffchen (17) eine erste Bewegung in einer Richtung bezüglich des Schlittens (11) an dem Ende des Vorwärtshubs und eine zweite Bewegung in der entgegengesetzten Richtung zu der ersten Bewegung bezüglich des Schlittens (11) an dem Ende des Rückhubs ausführt;
- einen Mechanismus, der das Schiffchen (17) mit dem Werkzeughalter (4) verbindet und der konfiguriert ist, um aufgrund der Wirkung der ersten Bewegung des Schiffchens (17) in Bezug auf den Schlitten (11) den Werkzeughalter (4) von einer ersten Position zu einer zweiten Position zu bewegen, die den Rückzugsabschnitt bestimmt, und aufgrund der Wirkung der zweiten Bewegung des Schiffchens (17) in Bezug auf den Schlitten (11) der Werkzeughalter (4) von der zweiten Position zu der ersten Position zurückzubringen, die den Annäherungsabschnitt bestimmt.

2. Modul nach Anspruch 1, wobei der Mechanismus Kontaktmittel, die von dem Schiffchen (17) getragen werden, und Formmittel, die von dem Werkzeughalter (4) getragen werden, umfasst, wobei der Mechanismus konfiguriert ist, um aufgrund der Wirkung der ersten Bewegung des Schiffchens (17) in Bezug auf den Schlitten (11) die Kontaktmittel die Formmittel drücken, um den Werkzeughalter (4) in die zweite Position zu bewegen, und aufgrund der Wirkung der zweiten Bewegung des Schiffchens (17) in Bezug auf den Schlitten (11) die Kontaktmittel die Formmittel drücken, um den Werkzeughalter (4) in die erste Position zurückzubringen.

3. Modul nach Anspruch 2, wobei die Kontaktmittel mindestens ein erstes Kontaktelement (20) und mindestens ein zweites Kontaktelement (21) umfassen und die Formmittel mindestens eine erste Form (22) und mindestens eine zweite Form (23) umfassen, die jeweils mit dem ersten Kontaktelement (20) und mit dem zweiten Kontaktelement (21) gekoppelt sind, wobei der Mechanismus konfiguriert ist, um aufgrund der Wirkung der ersten Bewegung des Schiffchens (17) in Bezug auf den Schlitten (11) das erste Kontaktelement (20) die erste Form (22) zu drücken, um den Werkzeughalter (4) in die zweite Position zu bewegen, und aufgrund der Wirkung der zweiten Bewegung des Schiffchens (17) in Bezug auf den Schlitten (11) das zweite Kontaktelement (21) die zweite Form (23) zu drücken, um den Werkzeughalter (4) in die erste Position zurückzubringen.

4. Modul nach Anspruch 3, wobei die erste Form (22) innerhalb eines ersten Lochs angeordnet ist, das in dem Werkzeughalter (4) ausgebildet ist, und die zweite Form (23) innerhalb eines zweiten Lochs angeordnet ist, das in dem Werkzeughalter (4) ausgebildet ist.

5. Modul nach Anspruch 3 oder 4, wobei die erste Form (22) und die zweite Form (23) um einen Winkel α in Bezug auf die geradlinige Hin- und Herbewegung des Schlittens (11) geneigt sind, wobei α in einem der folgenden Bereiche enthalten ist: 6° < α < 12°; 8° < α <12°; 6°<α< 11°; 8°<α<11°; 9°<α< 11°.

6. Modul nach einem der Ansprüche 3 bis 5, wobei das erste Kontaktelement (20) an einem ersten Kugelkopf angeordnet ist, der an einem ersten Gleitelement (24) des Schiffchens (17) angeordnet ist, welches in Bezug auf den Schlitten (11) axial verschieblich ist, und das zweite Kontaktelement (21) an einem zweiten Kugelkopf angeordnet ist, der an einem zweiten Gleitelement (25) des Schiffchens (17) angeordnet ist, welches in Bezug auf die Führung (11) axial verschieblich ist.

7. Modul nach einem der Ansprüche 3 bis 6, umfassend ein Gehäuse (27), das eine Schmiermittelkammer (28) hermetisch umschließt, in der sich der Schlitten (11) bewegen kann, wobei die ersten und zweiten Kontaktelemente (20 und 21) mit der Schmiermittelkammer (28) durch einen Schmiermittelkreislauf in Verbindung stehen, der mindestens teilweise in dem Schlitten (11) und in dem Schiffchen (17) ausgebildet ist.

8. Modul nach Anspruch 7, wobei der Schmiermittelkreislauf einen ersten Schmiermitteldurchgang (30), der innerhalb eines ersten Abschnitts des Schiffchens (17) erhalten wird, und einen zweiten Schmiermitteldurchgang (31), der innerhalb eines zweiten Abschnitts des Schiffchens (17) erhalten wird, umfasst, wobei der erste Schmiermitteldurchgang (30) mit dem ersten Kontaktelement (20) und mit einer äußeren seitlichen Oberfläche des ersten Abschnitts, die in einem ersten Hohlraum des Schlittens (11) enthalten ist, in Verbindung steht, wobei der zweite Schmiermitteldurchgang (31) mit dem zweiten Kontaktelement (21) und mit einer äußeren seitlichen Oberfläche des zweiten Abschnitts, die in einem zweiten Hohlraum des Schlittens (11) enthalten ist, in Verbindung steht, wobei der Schmiermittelkreislauf einen ersten Schmiermittelkanal (32), der innerhalb des Schlittens (11) erhalten wird und mit dem ersten Hohlraum und mit der Schmiermittelkammer (28) in Verbindung steht, und einen zweiten Schmiermittelkanal (33), der innerhalb des Schlittens (11) erhalten wird und mit dem zweiten Hohlraum und mit der Schmiermittelkammer (28) in Verbindung steht, umfasst, wodurch das erste Kontaktelement (20) mit der Schmiermittelkammer (28) durch den ersten Schmiermitteldurchgang (30) und den ersten Schmiermittelkanal (32) in Verbindung steht und das zweite Kontaktelement (21) mit der Schmiermittelkammer (28) durch den zweiten Schmiermitteldurchgang (31) und den zweiten Schmiermittelkanal (33) in Verbindung steht.

9. Modul nach einem der vorstehenden Ansprüche, wobei die Hin- und Herbewegung des Schiffchens (17) in Bezug auf den Schlitten (11) durch Führungsmittel geführt wird, die einen Nockenkörper (18) mit einem Nockenprofil umfassen, der auf dem Schlitten (11) angeordnet ist und durch den Stift (9) um die Stiftachse (Z) in Rotation versetzt wird, und Nockenstößelmittel (19), die an das Nockenprofil gekoppelt und mit dem Schiffchen (17) verbunden sind; wobei die Nockenstößelmittel (19) insbesondere zwei Nockenstößel umfassen, die an das Nockenprofil gekoppelt sind.

10. Modul nach einem der vorstehenden Ansprüche, wobei der Werkzeughalter (4) in Bezug auf den Schlitten (11) entlang einer oder mehrerer Linearführungen (15) verschieblich ist, insbesondere Führungen mit Wälzelementen, zum Beispiel flache Rollenkäfige.

11. Modul nach einem der vorstehenden Ansprüche, wobei der Werkzeughalter (4) in Bezug auf den Schlitten (11) entlang einer oder mehrerer linearer Führungen (15) verschieblich ist, die orthogonal zu der geradlinigen Hin- und Herbewegung des Schlittens (11) angeordnet sind.

12. Modul nach einem der vorstehenden Ansprüche, wobei das Planetengetriebe konfiguriert ist, so dass ein Teilkreisdurchmesser des Ritzels (7) gleich dem Zweifachen des Ritzel-Wellen-Abstands zwischen einer Ritzelachse (Y) des Ritzels (7) und einer Hauptachse (X) der Antriebswelle (2) ist, ein Radius der Innenverzahnung (8) gleich dem Teilkreisdurchmesser ist, und ein Stift-Ritzel-Abstand zwischen der Stiftachse (Z) und der Ritzelachse (Y) gleich dem Ritzel-Wellen-Abstand ist.

13. Modul nach einem der vorstehenden Ansprüche, wobei das Planetengetriebe für ein 1:1-Übersetzungsverhältnis zwischen der Antriebswelle (2) und dem Träger (6) oder für ein Untersetzungsverhältnis konfiguriert ist.

14. Modul nach einem der vorstehenden Ansprüche, wobei eine flache Kurbeloberfläche, die in das Ritzel (7) und in den Stift (9) integriert ist, mittels einer elastischen Kraft in Kontakt mit einer flachen Oberfläche des Schlittens (11) gehalten wird, wobei die flachen Oberflächen orthogonal zu einer Drehachse des Trägers (6) sind.

## Revendications

1. Module d'usinage, comprenant un porte-outil (4), un arbre d'entraînement (2) et un dispositif de déplacement conçu pour transformer un mouvement de rotation dudit arbre d'entraînement (2) en un mouvement dudit porte-outil (4) le long d'une trajectoire prédéfinie comprenant une course aller, dans lequel un outil d'usinage (5) porté par ledit porte-outil (4) est en prise avec une pièce à usiner, une course retour, dans lequel l'outil d'usinage (5) est désolidarisé de la pièce à usiner, une section de retrait, dans lequel l'outil d'usinage (5) s'éloigne de la pièce à usiner entre ladite course aller et ladite course retour, et une section d'approche, dans lequel l'outil d'usinage (5) s'approche de la pièce à usiner entre ladite course retour et ladite course aller, ledit dispositif de déplacement comprenant:
- un engrenage planétaire avec un support (6) qui peut être mis en rotation par ledit arbre d'entraînement (2), un pignon (7) entraîné excentriquement par ledit support (6), une broche (9) entraînée de manière excentrique par ledit pignon (7), et une denture interne (8) accouplée audit pignon (7), ledit engrenage planétaire étant conçu pour transformer un mouvement de rotation dudit arbre d'entraînement (2) en un mouvement rectiligne alternatif de ladite broche (9) pendant lequel ladite broche (9) tourne sur elle-même autour d'un axe de la broche (Z);
- un coulisseau (11) conçu pour effectuer un mouvement rectiligne alternatif guidé par ladite broche (9), ledit porte-outil (4) étant porté par ledit coulisseau (11) et étant mobile par rapport audit coulisseau avec un mouvement transversal dans une direction transversale audit mouvement rectiligne alternatif, moyennant quoi ledit mouvement rectiligne alternatif dudit coulisseau (11) permet audit porte-outil (4) d'effectuer lesdites courses aller et retour et ledit mouvement transversal dudit porte-outil (4) par rapport audit coulisseau (11) permet audit porte-outil (4) d'effectuer lesdites sections de retrait et d'approche;
**caractérisé en ce que** ledit dispositif de déplacement comprend:
- une navette (17) disposée sur ledit coulisseau (11) et pouvant coulisser par rapport audit coulisseau (11) avec un mouvement alternatif guidé de sorte que ladite navette (17) effectue un premier mouvement dans une direction par rapport audit coulisseau (11) à l'extrémité de ladite course aller et un second mouvement dans la direction opposée audit premier mouvement par rapport audit coulisseau (11) à la fin de ladite course retour;
- un mécanisme qui relie ladite navette (17) audit porte-outil (4) et qui est conçu de sorte que, sous l'effet dudit premier mouvement de ladite navette (17) par rapport audit coulisseau (11), ledit porte-outil (4) est déplacé d'une première position à une seconde position déterminant ladite section de retrait, et, en raison de l'effet dudit second mouvement de ladite navette (17) par rapport audit coulisseau (11), ledit porte-outil (4) est ramené de ladite seconde position à ladite première position déterminant ladite section d'approche.

2. Module selon la revendication 1, dans lequel ledit mécanisme comprend un moyen de contact porté par ladite navette (17) et un moyen de forme porté par ledit porte-outil (4), ledit mécanisme étant conçu de sorte que, du fait de l'effet dudit premier mouvement de ladite navette (17) par rapport audit coulisseau (11), ledit moyen de contact pousse ledit moyen de forme pour déplacer ledit porte-outil (4) dans ladite seconde position, et, du fait de l'effet du second mouvement de ladite navette (17) par rapport audit coulisseau (11), ledit moyen de contact pousse ledit moyen de forme pour ramener ledit porte-outil (4) dans ladite première position.

3. Module selon la revendication 2, dans lequel ledit moyen de contact comprend au moins un premier élément de contact (20) et au moins un second élément de contact (21) et ledit moyen de forme comprend au moins une première forme (22) et au moins une seconde forme (23) accouplées, respectivement, avec ledit premier élément de contact (20) et avec ledit second élément de contact (21), ledit mécanisme étant conçu de sorte que, du fait de l'effet dudit premier mouvement de ladite navette (17) par rapport audit coulisseau (11), ledit premier élément de contact (20) pousse ladite première forme (22) pour déplacer ledit porte-outil (4) dans ladite seconde position, et, du fait de l'effet dudit second mouvement de ladite navette (17) par rapport audit coulisseau (11), ledit second élément de contact (21) pousse ladite seconde forme (23) pour ramener ledit porte-outil (4) à ladite première position.

4. Module selon la revendication 3, dans lequel ladite première forme (22) est agencée à l'intérieur d'un premier trou pratiqué dans ledit porte-outil (4) et ladite seconde forme (23) est agencée à l'intérieur d'un second trou pratiqué dans ledit porte-outil (4).

5. Module selon la revendication 3 ou 4, dans lequel ladite première forme (22) et ladite seconde forme (23) sont inclinées d'un angle α par rapport audit mouvement rectiligne alternatif dudit coulisseau (11), avec α comporter dans l'une des plages suivantes: 6° < α < 12°; 8° < α <12° ; 6° < α < 11° ; 8° < α < 11° ; 9° < α < 11°.

6. Module selon l'une quelconque des revendications 3 à 5, dans lequel ledit premier élément de contact (20) est agencé sur une première tête sphérique agencée sur un premier élément coulissant (24) de ladite navette (17) qui peut coulisser axialement par rapport audit coulisseau (11), et ledit second élément de contact (21) est agencé sur une seconde tête sphérique agencée sur un second élément coulissant (25) de ladite navette (17) qui peut coulisser axialement par rapport audit coulisseau (11).

7. Module selon l'une quelconque des revendications 3 à 6, comprenant un boîtier (27) qui renferme hermétiquement une chambre de lubrifiant (28) dans laquelle ledit coulisseau (11) est mobile, lesdits premier et second élément de contact (20 et 21) étant en communication avec ladite chambre de lubrifiant (28) par l'intermédiaire d'un circuit de lubrifiant obtenu au moins en partie dans ledit coulisseau (11) et dans ladite navette (17).

8. Module selon la revendication 7, dans lequel ledit circuit de lubrifiant comprend un premier passage de lubrifiant (30) obtenu à l'intérieur d'une première partie de ladite navette (17) et un second passage de lubrifiant (31) obtenu à l'intérieur d'une seconde partie de ladite navette (17), ledit premier passage de lubrifiant (30) étant en communication avec ledit premier élément de contact (20) et avec une surface latérale externe de ladite première partie contenue dans une première cavité dudit coulisseau (11), ledit second passage de lubrifiant (31) étant en communication avec ledit second élément de contact (21) et avec une surface latérale externe de ladite seconde partie contenue dans une seconde cavité dudit coulisseau (11), ledit circuit de lubrifiant comprenant un premier conduit de lubrifiant (32) obtenu à l'intérieur dudit coulisseau (11) et communiquant avec ladite première cavité et avec ladite chambre de lubrifiant (28) et un second conduit de lubrifiant (33) obtenu à l'intérieur dudit coulisseau (11) et communiquant avec ladite seconde cavité et avec ladite chambre de lubrifiant (28), moyennant quoi ledit premier élément de contact (20) communique avec ladite chambre de lubrifiant (28) à travers ledit premier passage de lubrifiant (30) et ledit premier conduit de lubrifiant (32) et ledit second élément de contact (21) communique avec ladite chambre de lubrifiant (28) à travers ledit second passage de lubrifiant (31) et ledit second conduit de lubrifiant (33).

9. Module selon l'une quelconque des revendications précédentes, dans lequel ledit mouvement alternatif de ladite navette (17) par rapport audit coulisseau (11) est guidé par un moyen de guidage comprenant un corps de came (18) avec un profil de came qui est agencé sur ledit coulisseau (11) et est mis en rotation par ladite broche (9) autour dudit axe de broche (Z), et un moyen suiveur de came (19) accouplé audit profil de came et relié à ladite navette (17) ; ledit moyen suiveur de came (19) comprenant, en particulier, deux suiveurs de came accouplés audit profil de came.

10. Module selon l'une quelconque des revendications précédentes, dans lequel ledit porte-outil (4) peut coulisser par rapport audit coulisseau (11) le long d'un ou plusieurs guides linéaires (15), en particulier des guides avec des éléments roulants, par exemple des cages à rouleaux plates.

11. Module selon l'une quelconque des revendications précédentes, dans lequel ledit porte-outil (4) peut coulisser par rapport audit coulisseau (11) le long d'un ou plusieurs guides linéaires (15) agencés orthogonalement par rapport audit mouvement rectiligne alternatif dudit coulisseau (11).

12. Module selon l'une quelconque des revendications précédentes, dans lequel ledit engrenage planétaire est conçu de sorte qu'un diamètre de pas dudit pignon (7) est égal au double de la distance pignon-arbre entre un axe de pignon (Y) dudit pignon (7) et un axe principal (X) dudit arbre d'entraînement (2), un rayon de ladite denture interne (8) est égal audit diamètre de pas, et une distance broche-pignon entre ledit axe de broche (Z) et ledit axe de pignon (Y) est égale à ladite distance pignon-arbre.

13. Module selon l'une quelconque des revendications précédentes, dans lequel ledit engrenage planétaire est conçu pour un rapport de transmission 1:1 entre ledit arbre d'entraînement (2) et ledit support (6), ou pour un rapport de réduction.

14. Module selon l'une quelconque des revendications précédentes, dans lequel une surface de manivelle plate solidaire dudit pignon (7) et de ladite broche (9) est maintenue en contact avec une surface plane dudit coulisseau (11) au moyen d'une force élastique, lesdites surfaces planes étant orthogonales à un axe de rotation dudit support (6).
